# EUROPÄISCHE PATENTANMELDUNG

(11) **EP 1 923 193 A1**
(43) Veröffentlichungstag der Anmeldung: **21.05.2008**
(21) Anmeldenummer: 06124408.3
(22) Anmeldetag: 20.11.2006
(51) Int. Cl.: B29C 44/04, B29C 44/44

(54) **Verfahren und Vorrichtung zur Herstellung eines Schaumkörpers**

(71) Anmelder: Jacob-Formschaumtechnik GmbH, 90556 Cadolzburg (DE)
(72) Erfinder: Zacharioudaki, Kallirroi, 90513, Zinndorf (DE); Kapischke, Peter, 90556, Cadolzburg (DE); Schauder, Sven, 90613, Großhabersdorf (DE); Schedel, Markus, 08236, Ellefeld (DE)
(74) Vertreter: Zech, Stefan Markus

(57) **Zusammenfassung**

Es wird ein Verfahren zur Herstellung eines Schaumkörpers (20) aus Partikelschaum, insbesondere EPP oder EPS in einem Formteilautomaten (1) dargeboten, umfassend die folgenden Schritte: einen Füllschritt, in dem eine Hauptcharge (32) vorgeschäumter Partikel in eine Form (2) des Formteilautomaten (1) eingebracht werden, um eine die Form (2) im wesentlichen ausfüllende Partikelschüttung (22) zu erzielen, einen Schmelzschritt, in dem die Partikel durch Wärmebehandlung, insbesondere durch das Einbringen von Heißdampf (40), zu einem intermediären Netzwerk (24) verschmolzen werden, wobei vor dem Füllschritt weitere Schritte ausgeführt werden: ein Heizschritt, bei dem eine Wandung (5) der Form (2) über einen Schmelzpunkt (T_{SCH}) der vorgeschäumten Partikel aktiv beheizt wird, und ein Behautungsschritt, bei dem eine erste Charge (30) vorgeschäumter Partikel in die Form (2) eingebracht und an der beheizten Wandung (5) zu einer Behautung (21) verschmolzen wird.
Weiter wird eine Vorrichtung zur Herstellung eines Schaumkörpers aus Partikelschaum, dargeboten,
wobei wenigstens ein Teilbereich der Wandungen (5) über wenigstens ein Heizmittel (16) bis auf wenigstens auf eine Schmelztemperatur (T_{SCH}) der Partikel beheizbar ist.
Zudem wird ein Schaumkörper aus Partikelschaum, dargeboten.

## Beschreibung

Die vorliegende Erfindung betrifft ein Verfahren zur Herstellung eines Schaumkörpers aus Partikelschaum, insbesondere EPP oder EPS, in einem Formteilautomaten, umfassend die folgenden Schritte: einen Füllschritt, in dem eine Hauptcharge vorgeschäumter Partikel in eine Form des Formteilautomaten eingebracht wird, um eine die Form im Wesentlichen ausfüllende Partikelschüttung zu erzielen; und einen Schmelzschritt, in dem die Partikel durch Wärmebehandlung insbesondere durch das Einbringen von Heißdampf, zu einem intermediären Netzwerk verschmolzen werden.

Zudem betrifft vorliegende Erfindung eine Vorrichtung, insbesondere einen Formteilautomat, zur Herstellung eines Schaumkörpers aus Partikelschaum, insbesondere EPP oder EPS, umfassend eine Form mit Wandungen, die die Form begrenzen, wenigstens einen Partikeleinlass und wenigstens einen Wärmebehandlungseinlass, insbesondere Heißdampfeinlass.

Schließlich umfasst vorliegende Erfindung auch einen Schaumkörper aus Partikelschaum, insbesondere EPP oder EPS, mit einem zu einem intermediären Netzwerk aus vorgeschäumten Partikeln verschmolzenen Hauptkörper und einer daran angeschmolzenen Behautung aus dem selben Material.

Aus Partikelschaum gebildete Schaumkörper bestehen aus einem intermediären Netzwerk von miteinander verschweißten, aufgeschäumten Partikeln. Derartige Schaumkörper weisen eine schon in optischer Hinsicht unbefriedigende Oberfläche auf. Darüber hinaus bilden sich von der Oberfläche her leicht in den Schaumkörper eindringende Rissstellen. Weiterhin können auch Flüssigkeiten von einer derart unbehandelten Oberfläche nur allzu leicht in das intermediäre Netzwerk eindringen und für den Schaumkörper selbst, für ein darin eingebautes Gut oder in anderer Weise schädigend wirken. Beispielsweise hat sich gezeigt, dass Getriebeöl in Schaumkörper geringer und mittlerer Dichte ohne weiteres eindringt und je nach Stärke des Schaumkörpers durch das intermediäre Netzwerk hindurch sickert. Dient der Schaumkörper als Behältnis, kann ein solcher Öldurchtritt unerwünscht sein. Auch bei der Verwendung der oben genannten Schaumkörper als Transportboxen für Lebensmittel ist diese "offenporige" Struktur nachteilig, da sie als Nährboden für Keime dient. Ganz generell wirkt ein Schaumkörper, bei dem das intermediäre Netzwerk an seiner Oberfläche erkennbar ist, darüber hinaus oftmals minderwertig.

Um hier Abhilfe zu schaffen, sind nach dem Stand der Technik mehrere Lösungen bekannt. So können beispielsweise Kunststoff-Folien auf den Schaumkörper aufkaschiert werden, was jedoch aufwändig ist und gleichzeitig die Recyclingfähigkeit des Produktes verschlechtert.

In einer weiteren Lösung ist gemäß DE 43 08 764 A1 vorgesehen, die Oberfläche des Schaumkörpers dadurch zu versiegeln, dass dort ein thermisches Nachverdichten des Schaumstoffes durchgeführt wird. Konkret wird in einem zweiten Arbeitsschritt nach dem Ausformen des Schaumkörpers mittels eines Heißstempels die oberste Schicht angeschmolzen und dadurch verdichtet. Nachteilig ist hier jedoch der höhere Arbeitsaufwand. Darüber hinaus geht durch das nachträgliche Anschmelzen die Elastizität der obersten Schaumstoffschicht verloren, so dass die Oberfläche leicht brüchig wird.

Eine weitere diesbezügliche Lösung zeigt die EP 15 26 076 A1, der gemäß die Oberfläche des Schaumkörpers mit einer mindestens einschichtigen Nutzschicht aus einem flüssig oder viskos aufgebrachten und ausgehärteten Kunststoff-Elastomer versehen wird. Der Nachteil einer solchen Ausführungsform ist jedoch wie schon bei der zuvor genannten Folienkaschierung die Verwendung unterschiedlicher Materialien, was sich auf die Recyclingfähigkeit des Produktes negativ auswirkt und die Tatsache, dass das Aufbringen der Kunststoff-Elastomerschicht ebenfalls in einem weiteren Arbeitsgang erfolgen muss, was die Herstellungskosten erhöht.

Vorliegender Erfindung liegt also die Aufgabe zugrunde, ein Verfahren zur Herstellung eines Schaumkörpers bzw. eine Vorrichtung zur Herstellung desselben zur Verfügung zu stellen, um eine einfachere, kostengünstigere und bezüglich des Herstellungsproduktes bessere Produktion von Schaumkörpern aus Partikelschaum zu ermöglichen.

Diese Aufgabe wird durch ein Verfahren zur Herstellung eines Schaumkörpers gemäß Patentanspruch 1, durch eine Vorrichtung zur Herstellung eines solchen Schaumkörpers gemäß Patentanspruch 7und durch einen entsprechenden Schaumkörper aus Partikelschaum gemäß Patentanspruch 14 gelöst.

Insbesondere wird diese Aufgabe also durch ein Verfahren zur Herstellung eines Schaumkörpers aus Partikelschaum, insbesondere EPP oder EPS, in einem Formteilautomaten gelöst, umfassend die folgenden Schritte: einen Füllschritt, in dem eine Hauptcharge vorgeschäumter Partikel in eine Form des Formteilautomaten eingebracht wird, um eine die Form im Wesentlichen ausfüllende Partikelschüttung zu erzielen; einen Schmelzschritt, in dem die Partikel durch Wärmebehandlung, insbesondere durch das Einbringen von Heißdampf, zu einem intermediären Netzwerk verschmolzen werden, und durch vor dem Füllschritt ausgeführte weitere Schritte: einen Heizschritt, bei dem eine Wandung der Form über einen Schmelzpunkt der vorgeschäumten Partikel aktiv beheizt wird, und einen Behautungsschritt, bei dem eine erste Charge vorgeschäumter Partikel in die Form eingebracht und an der beheizten Wandung zu einer Behautung verschmolzen wird.

Bei der Produktion des Schaumkörpers wird also zuerst eine erste Charge vorgeschäumter Partikel in die Form eingebracht, und insbesondere vorzugsweise eingeblasen. Diese einzelnen vorgeschäumten Partikel treten dann in Kontakt mit einer beheizten Wandung der Form, setzen sich an dieser fest und verschmelzen zu einer Behautung. Es ist allerdings auch denkbar, die erste Charge zuerst in die Form einzubringen, und dann erst, also nach oder während dem Einbringen, die Wandungen zu erhitzen. Die Partikel würden sich bei dieser Vorgehensweise aufgrund ihrer Schwerkraft auf diejenigen Wandungen absetzen, mittels denen eine Behautung vorgenommen werden soll. Der Formteilautomat bzw. die Form müsste also dazu entsprechend positioniert werden.

Anschließend wird im Füllschritt und dem folgenden Schmelzschritt eine zweite Charge, die so genannte Hauptcharge in die Form des Formteilautomaten eingebracht und durch eine Wärmebehandlung zu einem intermediären Netzwerk verschmolzen. Die vorgeschäumten Partikel verbinden sich dabei untereinander und mit der zuvor erzeugten Behautung, so dass ein Schaumkörper mit zweischichtigem, sehr stabilem Aufbau entsteht. Vielmehr fungiert die sehr glatte Behautung als eine Schmelzform für diese Hauptcharge, so dass eine sehr feste Anbindung an dieselbe erfolgt. Im Vergleich zum Stand der Technik ist dabei die Behautung zudem sehr glatt ausgebildet, da sie ohne Störeinflüsse an der beheizten Wandung der Form angeschmolzen wurde. Beim anschließenden Verfüllen und Verschmelzen mit der Hauptcharge bleibt diese sehr glatte Behautung erhalten.

Ein weiterer Vorteil des hier beanspruchten Verfahrens ist die Tatsache, dass keinerlei Ausschalzwischenschritte nötig sind, sondern dass vielmehr der Schaumkörper innerhalb einer einzigen Form hergestellt werden kann. Da darüber hinaus die Behautung und der durch das intermediäre Netzwerk gebildete Hauptkörper des Schaumkörpers aus demselben Material bestehen, sind auch seine Recyclingeigenschaften besonders vorteilhaft.

Durch die Ausbildung der sehr glatten Behautung kann folglich der mit dem erfindungsgemäßen Verfahren hergestellte Schaumkörper sehr vielseitig verwendet werden. So ist hier die Aufnahme von Lebensmitteln oder anderen Gegenständen denkbar, die strengen Hygieneanforderungen unterworfen sind. Auch ist der Transport und die Aufbewahrung von Gefahrengut möglich, da ein Austreten eventueller toxischer Flüssigkeiten sicher verhindert werden kann. Aufgrund der sehr guten Dämm- und Schallschutzeigenschaften ist natürlich auch die Verwendung des erfindungsgemäßen Schaumkörpers als Wanne denkbar, um eine Kühlanordnung, nämlich einen Kompressor, Wärmetauscher etc. eines Kühlschranks oder einer ähnlichen Kühleinrichtung aufzunehmen. Hier sind darüber hinaus entsprechende Aufnahmevorrichtungen und Versorgungsvorrichtungen, wie Falze, Durchdringungen etc. "schäumbar".

Das Verschmelzen der Hauptcharge im Schmelzschritt kann, wie aus dem Stand der Technik bekannt, insbesondere durch das Einbringen von Heißdampf erfolgen. Natürlich sind hier aber auch Verfahren, wie beispielsweise eine Mikrowellenbehandlung oder vergleichbare oder andere bekannte Wärmebehandlungen denkbar. Grundsätzlich ist es aber auch möglich einen Partikelschaum zu verwenden, der mittels Treibmittel oder ähnlicher physikalischer Schaumprozesse innerhalb der Form des Formteilautomaten expandiert wird, so lange der Werkstoff die Bildung einer Behautung in einem ersten Behautungsschritt an den beheizten Wandungen der Form erlaubt.

Je nach Bedarf ist es natürlich auch möglich nur Teilbereiche der Wandung der Form des Formteilautomaten zu beheizen, um beispielsweise nur in bestimmten Bereichen eine Behautung auszubilden.

Vorzugsweise umfasst das Herstellverfahren einen Kühlschritt nach und/oder gegen Ende des Behautungsschrittes, bei dem die Form und insbesondere wenigstens ein Teilbereich der Wandung abgekühlt wird. Auf diese Weise wird vermieden, dass die mit der Hauptcharge eingeblasenen vorgeschäumten Partikel unkontrolliert verschmelzen, bevor der eigentliche Schmelzschritt initiiert wird. Das Abkühlen der Form und insbesondere der im vorhergehenden Behautungsschritt beheizten Wandung garantiert vielmehr die gleichmäßige Verteilung der mit der Hauptcharge eingeblasenen oder eingebrachten Partikel und deren Kumulation zu einer im Wesentlichen die Form ausfüllenden Partikelschüttung.

Vorzugsweise wird in einem Kühlschritt wenigstens ein Teil der nicht aktiv beheizten Wandung gekühlt. So ist es nämlich denkbar, dass durch das Beheizen von bestimmten Wandungsbereichen andere Wandungsbereiche über Strahlungswärme ebenfalls beheizt werden, so dass dort im Behautungsschritt eine, wenn auch qualitativ minderwertige Behautung entsteht. Durch das Kühlen dieser Bereiche in einem Kühlschritt wird dies verhindert. Natürlich ist anstelle des Kühlschrittes auch eine entsprechende konstruktive Lösung, wie beispielsweise die Ausbildung von Wärmeisolationen an der Form denkbar. Diesbezüglich wird hier auf eine noch folgende Abhandlung weiter unter verwiesen.

Vorzugsweise wird während des Behautungsschrittes in der Form ein Überdruck aufgebracht. Dies hat zur Folge, dass die eingeschäumten Partikel nicht expandieren und die Behautung eine besonders dichte Struktur bekommt.

Vorzugsweise wird vor dem Füllschritt eine im Behautungsschritt erzeugte, der Form bzw. der Forminnenseite zugewandte Innenseite der Behautung durch eine Wärmebehandlung, insbesondere durch das Einbringen von Heißdampf aufgeschmolzen. Auf diese Weise wird eine sichere Verbindung zwischen Behautung und dem im Füllschritt und im Schmelzschritt erzeugten intermediären Netzwerk des Hauptkörpers garantiert.

Vorliegende Erfindung betrifft neben dem Herstellverfahren auch eine Vorrichtung, insbesondere einen Formteilautomaten, zur Herstellung eines Schaumkörpers aus Partikelschaum, insbesondere EPP oder EPS, umfassend eine Form mit Wandungen, die die Form begrenzen, wenigstens einen Partikeleinlass, wenigstens einen Wärmebehandlungseinlass, insbesondere Heißdampfeinlass, wobei wenigstens ein Teilbereich der Wandungen über wenigstens ein Heizmittel bis auf wenigstens eine Schmelztemperatur der Partikel beheizbar ist.

Sämtliche zuvor genannten Vorteile des Herstellungsverfahrens beziehen sich auch explizit auf die hier beschriebene Vorrichtung, so dass der einfachheithalber und um Wiederholungen zu vermeiden darauf nicht erneut eingegangen wird.

Jedoch sei erwähnt, dass der hier genannte Wärmebehandlungseinlass und insbesondere Heißdampfeinlass eine Vorrichtung ist, die der Wärmebehandlung der mit der Hauptcharge eingebrachten vorgeschäumten Partikeln im Schmelzschritt dient. Diese Wärmebehandlung kann also das Einbringen von Heißdampf, oder die Beaufschlagung der Partikel mit Mikrowellenstrahlung etc. sein.

Das Heizmittel kann ebenfalls jedes aus dem Stand der Technik bekannte Heizmittel sein, das es ermöglicht, die Wandungsbereiche der Form, insbesondere an speziell definierten Stellen oder Teilbereichen zu beheizen. Hier ist beispielsweise die Ausbildung des Heizmittels mit wenigstens einem Heizkreislauf möglich, der beispielsweise als Ölkreislauf, Heißwasser- oder Heißdampfkreislauf ausgebildet ist und die zu beheizenden Wandungsbereiche durchströmt. Zudem sind hier natürlich sämtliche aus dem Stand der Technik bekannte Verfahren, wie beispielsweise Induktionsheizsysteme, elektrische Heizsysteme etc. anwendbar.

Vorzugsweise ist dabei die Wandung oder ein Teilbereich der Wandung bis auf wenigstens eine Kontakt-Schmelztemperatur beheizbar. Diese Kontakt-Schmelztemperatur ist so hoch, dass einzelne, in die Form eingebrachte vorgeschäumte Partikel beim Kontakt mit der beheizten Wandung anhaften und verschmelzen. Insofern liegt also diese Kontakt-Schmelztemperatur höher als die Schmelztemperatur, die beispielsweise dazu nötig ist ein vorgeschäumtes Partikel, das auf der beheizten Wandung aufliegt zu schmelzen.

Vorzugsweise ist die Form und insbesondere wenigstens ein Teilbereich der Wandungen über wenigstens ein Kühlmittel abkühlbar, wobei dieses Kühlmittel vorzugsweise wenigstens ebenfalls einen Kühlkreislauf umfasst, der wenigstens einen Teilbereich der Wandungen durchzieht. Diese erfindungsgemäße Ausführungsform dient wie zuvor beschrieben, der Abkühlung der beheizten Wandung nach dem Behautungsschritt oder aber auch der Abkühlung anderer, nicht beheizter Wandungen während des Behautungsschrittes, um hier die Ausbildung einer ungewollten Behautung zu verhindern. Generell kann dieser Kühlkreislauf aber auch dem Abkühlen der Form dienen, um nach der Behautung eine optimale Fülltemperatur zum Einbringen der Hauptcharge zu gewährleisten. Neben der Ausbildung mit einem aktiven Kühlsystem ist aber auch die Ausbildung von entsprechenden Kühlrippen, Isolationsschichten zwischen einzelnen Wandungsbereichen etc. denkbar.

Vorzugsweise ist das Heizmittel auch als ein Kühlmittel ausgebildet und umgekehrt. Dies bedeutet, dass das im Formteilautomaten ausgebildete Heizmittel, also beispielsweise eine Heizeinrichtung mit einem angeschlossenen Heizkreislauf auch als Kühlmittel verwendet werden kann oder dass zumindest bestimmte Bereiche, wie beispielsweise der Heizkreislauf bzw. der Kühlkreislauf zum Heizen und zum Kühlen verwendet werden kann.

Vorliegende Erfindung betrifft neben den zuvor beschriebenen Verfahren und der Vorrichtung zur Herstellung eines Schaumkörpers auch den Schaumkörper aus Partikelschaum, insbesondere EPP oder EPS, mit einem zu einem intermediären Netzwerk aus vorgeschäumten Partikeln verschmolzenem Hauptkörper und einer daran angeschmolzenen Behautung aus dem selben Material, wobei die Behautung als eine Schmelzform ausgebildet ist und das intermediäre Netzwerk des Hauptkörpers auf die Behautung aufgeschmolzen ist.

Die Tatsache, dass die Behautung als eine Schmelzform dient garantiert, wie bereits eingangs erwähnt, die sehr dichte Ausbildung der, gegen die Innenwandung der Form angeschmolzenen Behautung und die sehr stabile Verbindung zwischen der Behautung und dem daran angeschmolzenen Hauptkörper. Da im Gegensatz zum Stand der Technik zuerst die Behautung ausgebildet wird, und daran dann das intermediäre Netzwerk des Hauptkörpers angeschmolzen wird, bildet sich ein im Vergleich zum Stand der Technik sehr viel dichteres und zudem glatteres, den eingangs genannten Aufforderungen an den erfindungsgemäßen Schaumkörper gerecht werdendes Bauteil.

Vorzugsweise weist der Schaumkörper wenigstens einen integral angeschäumten Verbindungsfalz zur Aufnahme einer Verbindungsnut eines weiteren Schaumkörpers auf oder umgekehrt. Diese Verbindungsfalz-/Verbindungsnutausführung ermöglicht das Zusammenstecken mehrerer Schaumkörper zu Schaumkörperkomplexen und somit beispielsweise die Verwendung als Isolationsboxen oder ähnlichen geschlossenen oder begrenzten Behältnissen, insbesondere zur Aufnahme und Fixierung von Kühlanordnungen wie Kompressoren, Wärmetauschern etc..

Der vorgeschriebene Schaumkörper kann nach einer weiteren Überlegung der vorliegenden Erfindung als Lebens- bzw. Nahrungsmittelbehältnis, als flüssigkeitsdichtes, insbesondere öldichtes Isolierbehältnis, als Kondensatwanne, insbesondere für eine Kälte- oder Wärmemaschine oder als isoliertes Rahmenteil eines Gerätes verwendet werden.

Weitere Ausführungsformen der Erfindung ergeben sich aus den Unteransprüchen.

Im Folgenden wird der Erfindungsgegenstand anhand von Ausführungsbeispielen näher beschrieben, die anhand der beiliegenden Zeichnungen näher erläutert werden.

Hierbei zeigen:
- Fig. 1 bis 3: eine Ausführungsform des Formteilautomaten und des erfindungsgemäßen Herstellungsverfahrens;
- Fig. 4: eine isometrische Darstellung zweier Ausführungsformen des erfindungsgemäßen Schaumkörpers;
- Fig. 5: einen Schnitt durch die Ausführungsformen aus Fig. 4.

Im folgenden werden für gleiche und gleichwirkende Bauteile dieselben Bezugsziffern verwendet, wobei bisweilen zur Unterscheidung indizierte Bezugszeichen ihre Anwendung finden.

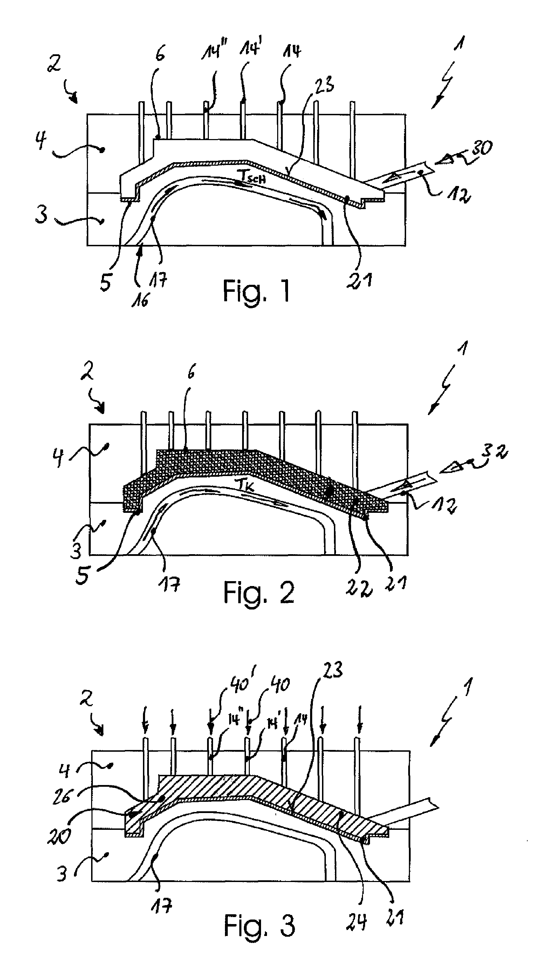

Die Fig. 1 bis 3 zeigen eine schematische Darstellung eines erfindungsgemäßen Formteilautomaten 1 sowie des erfindungsgemäßen Verfahrens zur Herstellung eines Schaumkörpers 20 aus Partikelschaum.

Der Formteilautomat 1 umfasst eine Form 2, die sich aus einer Oberform 4 und einer Unterform 3 zusammensetzt. Die Oberform 4 weißt eine Wandung 6 und die Unterform 3 eine Wandung 5 auf. Des weiteren sind in der Oberform 4 Heißdampfeinlässe 14 vorgesehen, durch die, wie im folgenden noch näher beschrieben, Heißdampf eingeleitet werden kann. Die Unterform 3 umfasst einen Heizkreislauf 17, der Teil eines Heizmittels 16 ist und das Beheizen der Wandung 5 der Unterform 3 ermöglicht. Weiter umfasst der Formteilautomat 1 einen Partikeleinlass 12, der dem Einbringen von vorgeschäumten Partikeln, insbesondere aus EPP oder EPS in die Form 2 dient.

Im Folgenden wird nun anhand dieses Formteilautomaten 1 das erfindungsgemäße Verfahren zur Herstellung eines Schaumkörpers aus Partikelschaum beschrieben.

In einem ersten Schritt (siehe Fig. 1) wird über den Partikeleinlass 12 eine erste Charge 30 aus vorgeschäumten Partikeln in die Form 2 eingebracht. Zuvor wurde über den Heizkreislauf 17 die Wandung 5 der Unterform 3 oder Oberform 4 auf eine Temperatur beheizt, die der Schmelztemperatur T_{SCH} dieser vorgeschäumten Partikel entspricht. Beim Einbringen oder hier Einblasen der ersten Charge 30 dieser Partikel legen sich diese an der beheizten Wandung 5 an und verschmelzen zu einer Behautung 21.

Nach diesem so genannten Behautungsschritt wird über den Heizkreislauf 17 ein Kühlschritt, beispielsweise durch Abstellen des Heizkreislaufes 17, und/oder durch Einwirkung eines Kühlmediums durchgeführt, der die Wandung 5 der Unterform 3 wieder auf eine Temperatur unter den Schmelzpunkt der Partikel abkühlt. Insofern fungiert der Heizkreislauf 17 und das zuvor erwähnte Heizmittel 16 also auch als Kühlmittel 16 bzw. Kühlkreislauf 17. Natürlich ist es hier aber auch möglich einen eigenen Kühlkreislauf (nicht dargestellt) auszubilden.

Durch das Abkühlen der Wandung 5 über den Kühlkreislauf 17 auf eine Temperatur T_{K} wird im nun folgenden Füllschritt (siehe Fig. 2) das unkontrollierte Anhaften und Aufquellen der vorgeschäumten Partikel verhindert. Vielmehr garantiert die nun abgesenkte Temperatur T_{K} eine gleichmäßige Verteilung von Partikeln, die in einer Hauptcharge 32 über den Partikeleinlass 12 in die Form 2 eingebracht werden. Sobald in der Form 2 eine die Form im Wesentlichen vollständig ausfüllende Partikelschüttung 22 erzielt wurde, wird in einem folgenden Schmelzschritt (siehe Fig. 3) Heißdampf 40 über die Heißdampfeinlässe 14 in die Form 2 eingebracht. Infolge dieser Wärmebehandlung durch den Heißdampf 40 verschmelzen die Partikel der Partikelschüttung 22 zum einen zu einem intermediären Netzwerk 24 und zum anderen mit einer Innenseite 23 der Behautung 21. Auf diese Weise wird ein zweischichtiger Schaumkörper 20, bestehend aus der Behautung 21 und einem durch das intermediäre Netzwerk 24 gebildeten Hauptkörper 26 gebildet. Über den Heiz-/Kühlkreislauf 17 ist es nun zusätzlich möglich, nach Beendigung der Heißdampfzuleitung über die Heißdampfeinlässe 14 die Form 2 zu kühlen, um ein schnelles Ausschalen des Formkörpers 20 zu erlauben. Der Schaumkörper 20 kann nun entnommen und insbesondere einem weiteren Produktionsablauf zugeführt werden.

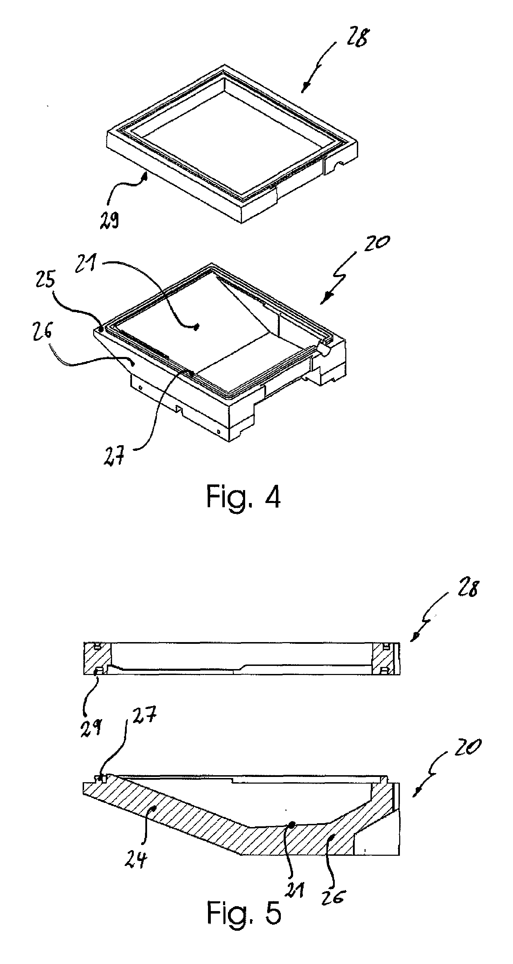

Die Fig. 4 und 5 zeigen zwei Ausführungsformen des erfindungsgemäßen Schaumkörpers 20.

So zeigt Fig. 4 eine isometrische Darstellung eines Schaumkörpers 20, der hier als eine Wanne 20 ausgebildet ist. Diese Wanne 20 umfasst eine Behautung 21, die insbesondere in dem zuvor beschriebenen Verfahren mit einem aus einem intermediär verschmolzenen Netzwerk gebildeten Hauptkörper 26 verbunden ist. Auf einem Oberrand 25 umfasst diese Wanne 20 einen umlaufenden Verbindungsfalz 27, der in eine komplementär ausgebildete Verbindungsnut 29 eines weiteren Schaumkörpers 28, eingreifbar ausgebildet ist, um die beiden Bauteile 20, 28 miteinander zu verbinden.

Durch entsprechende in der Form eines Formteilautomaten (hier nicht dargestellt) ausgebildete Hinterschneidungen ist diese Verbindung von Verbindungsfalz 27 und Verbindungsnut 29 als "Klickverbindung" ausgebildet, so dass eine sichere Verbindung der beiden Bauteile 20, 28 möglich ist. Auf diese Weise kann die hier dargestellte Anordnung beispielsweise der Aufnahme eines Kühlaggregates eines Kompressors oder einer ähnlichen Anordnung dienen, die durch das Aufsetzen des hier als Rahmen 28 ausgebildeten weiteren Schaumkörpers 28 fest, schlag- und schallabsorbierend im erfindungsgemäßen Schaumkörper verpackt ist.

### Bezugszeichenliste

- 1: Formteilautomat
- 2: Form
- 3: Unterform
- 4: Oberform
- 5: (beheizte) Wandung
- 6: Wandung
- 12: Partikeleinlass
- 14: Heißdampfeinlass
- 16: Heizmittel bzw. Kühlmittel
- 17: Heizkreislauf bzw. Kühlkreislauf
- 20: Schaumkörper bzw. Wanne
- 21: Behautung
- 22: Partikelschüttung
- 23: Innenseite der Behautung
- 24: Intermediäres Netzwerk
- 25: Oberrand
- 26: Hauptkörper
- 27: Verbindungsfalz
- 28: Weiterer Schaumkörper bzw. Rahmen
- 29: Verbindungsnut
- 30: Erste Charge
- 32: Hauptcharge
- 40: Heißdampf

- T_{K}: Kühltemperatur
- T_{SCH}: Schmelzemperatur

## Patentansprüche

1. Verfahren zur Herstellung eines Schaumkörpers (20) aus Partikelschaum, insbesondere EPP oder EPS, in einem Formteilautomaten (1), umfassend die folgenden Schritte:
einen Füllschritt, in dem eine Hauptcharge (32) vorgeschäumter Partikel in eine Form (2) des Formteilautomaten (1) eingebracht werden, um eine die Form (2) im wesentlichen ausfüllende Partikelschüttung (22) zu erzielen;
einen Schmelzschritt, in dem die Partikel durch Wärmebehandlung, insbesondere durch das Einbringen von Heißdampf (40), zu einem intermediären Netzwerk (24) verschmolzen werden,
**gekennzeichnet, durch**
vor dem Füllschritt ausgeführte weitere Schritte:
einen Heizschritt, bei dem eine Wandung (5) der Form (2) über einen Schmelzpunkt (T_{SCH}) der vorgeschäumten Partikel aktiv beheizt wird, und
einen Behautungsschritt, bei dem eine erste Charge (30) vorgeschäumter Partikel in die Form (2) eingebracht und an der beheizten Wandung (5) zu einer Behautung (21) verschmolzen wird.

2. Herstellverfahren nach Anspruch 1,
**dadurch gekennzeichnet, dass**
beim Heizschritt nur ein Teilbereich der Wandung (5) beheizt wird.

3. Herstellverfahren nach einem der Ansprüche 1 oder 2,
**gekennzeichnet durch**
einen Kühlschritt nach und/oder gegen Ende des Behautungsschrittes, bei dem die Form (2) und insbesondere wenigstens ein Teilbereich der Wandung (5) abgekühlt wird.

4. Herstellverfahren nach einem der vorhergehenden Ansprüche,
**gekennzeichnet durch**
einen Kühlschritt, bei dem wenigstens ein Teil einer nicht aktiv beheizten Wandung (6) gekühlt wird.

5. Herstellverfahren nach einem der vorhergehenden Ansprüche,
**dadurch gekennzeichnet, dass**
während des Behautungsschrittes in der Form (2) ein Überdruck aufgebracht wird.

6. Herstellverfahren nach einem der vorhergehenden Ansprüche,
**dadurch gekennzeichnet, dass**
vor dem Füllschritt eine im Behautungsschritt erzeugte, der Form (2) zugewandte Innenseite (23) der Behautung (21) durch eine Wärmebehandlung, insbesondere durch das Einbringen von Heißdampf aufgeschmolzen wird.

7. Vorrichtung, insbesondere Formteilautomat (1), zur Herstellung eines Schaumkörpers (20) aus Partikelschaum, insbesondere EPP oder EPS, umfassend eine Form (2) mit Wandungen (5, 6), die die Form (2) begrenzen,
wenigstens einen Partikeleinlass (12),
wenigstens einen Wärmebehandlungseinlass (14), insbesondere Heißdampfeinlass,
**dadurch gekennzeichnet, dass**
wenigstens ein Teilbereich der Wandungen (5) über wenigstens ein Heizmittel (16) bis auf wenigstens auf eine Schmelztemperatur (T_{SCH}) der Partikel beheizbar ist.

8. Vorrichtung nach Anspruch 7,
**dadurch gekennzeichnet, dass**
der wenigstens eine Teilbereich der Wandungen (5) bis auf wenigstens eine Kontakt-Schmelztemperatur beheizbar ist.

9. Vorrichtung nach einem der Ansprüche 7 oder 8,
**dadurch gekennzeichnet, dass**
das Heizmittel (16) wenigstens einen Heizkreislauf (17) umfasst, der wenigstens einen Teilbereich der Wandungen (5) durchzieht.

10. Vorrichtung nach Anspruch 9,
**dadurch gekennzeichnet, dass**
der Heizkreislauf (17) ein Ölkreislauf, Heißwasser- oder Heißdampfkreislauf ist.

11. Vorrichtung nach einem der Ansprüche 7 bis 10,
**dadurch gekennzeichnet, dass**
die Form (2) und insbesondere wenigstens ein Teilbereich der Wandungen (5) über wenigstens ein Kühlmittel (16) abkühlbar ist.

12. Vorrichtung nach Anspruch 11,
**dadurch gekennzeichnet, dass**
das Kühlmittel (16) wenigstens einen Kühlkreislauf (17) umfasst, der wenigstens einen Teilbereich der Wandungen (5) durchzieht.

13. Vorrichtung nach einem der Ansprüche 7 bis 12,
**dadurch gekennzeichnet, dass**
das Heizmittel (16) auch als ein Kühlmittel (16) ausgebildet ist und umgekehrt.

14. Schaumkörper aus Partikelschaum, insbesondere EPP oder EPS,
mit einem zu einem intermediären Netzwerk (24) aus vorgeschäumten Partikeln verschmolzenem Hauptkörper (26) und einer daran angeschmolzenen Behautung (21) aus dem selben Material,
**dadurch gekennzeichnet, dass**
die Behautung (21) als eine Schmelzform ausgebildet ist,
und das intermediäre Netzwerk (24) des Hauptkörpers (26) auf die Behautung (21) aufgeschmolzen ist.

15. Schaumkörper nach Anspruch 14
**gekennzeichnet durch**
wenigstens einen integral angeschäumten Verbindungsfalz (27), zur Aufnahme einer Verbindungsnut (29) eines weiteren Schaumkörpers (28) oder umgekehrt.

16. Schaumkörper nach Anspruch 14 oder 15,
zur Verwendung als Lebens- bzw. Nahrungsmittelbehältnis, als flüssigkeitsdichtendes, insbesondere öldichtes, Isolierbehältnis, als Kondensatwanne, insbesondere für eine Kälte- oder Wärmemaschine oder als isoliertes Rahmenteil eines Gerätes.
